# EUROPEAN PATENT APPLICATION

(11) **EP 4 732 966 A2**
(43) Date of publication of application: **29.04.2026**
(21) Application number: 25208891.9
(22) Date of filing: 15.10.2025
(51) Int. Cl.: B08B 7/02, B08B 9/00, B08B 15/02

(54) **POWDER REMOVAL DEVICE**

(30) Priority: 28.10.2024 JP 2024188827
(71) Applicant: Sintokogio, Ltd., Nagoya-shi, Aichi 450-6424 (JP)
(72) Inventor: KAJITA, Kouji, Nagoya-shi 450-6424 (JP); INOUE, Takayuki, Nagoya-shi 450-6424 (JP); KITAHORA, Kazuhiko, Nagoya-shi 450-6424 (JP); TOKORO, Misuzu, Nagoya-shi 450-6424 (JP)
(74) Representative: Ribeiro, James Michael

(57) **Abstract**

A powder removal device (1) according to one aspect removes powder (M2) from an additive molded object (M1). The powder removal device includes a rotation drum (20) having a processing chamber (S), and a holder (30) disposed in the processing chamber to fix the additive molded object, wherein the rotation drum is rotatable around a first axis (AX1), and the holder is attached to the rotation drum to rotate around the first axis together with the rotation drum.

## Description

### CROSS-REFERENCE TO RELATED APPLICATIONS

This application is based on and claims the benefit of priority from Japanese Patent Application No. 2024-188827 filed on October 28, 2024, the entire contents of which are incorporated herein by reference.

### TECHNICAL FIELD

The present disclosure relates to a powder removal device.

### BACKGROUND

An additive manufacturing device forms an additive molded object made of a metal by repeating a process of selectively irradiating a layer of metal powder with a laser to melt and solidify the metal powder. Since metal powder outside a region irradiated with the laser remains in the additive molded object, it is required to remove the powder from the additive molded object after additive manufacturing.

As a technique for removing unbound powder from an additive molded object manufactured by an additive manufacturing method, a device described in Patent Document 1 is known. This device includes a chamber having an inspection window and a glove flap, a rotation table that supports an additive molded object in the chamber, and a horizontal rotation device that supports the rotation table on its axis. The rotation table applies vibrations to the additive molded object while rotating around two axes, a horizontal axis and a vertical axis. Thus, powder is discharged from the inside of the additive molded object having a complex internal structure, and the additive molded object is cleaned.

### CITATION LIST

### PATENT DOCUMENT

Patent Document 1: German utility model No. 202016003042

### SUMMARY

### TECHNICAL PROBLEM

As described above, in the device described in Patent Document 1, since the rotation table rotates around the two axes, the horizontal axis and the vertical axis, while supporting the additive molded object in the chamber, the chamber is required to have a size corresponding to a rotation diameter of the additive molded object. As the size of the chamber increases, the entire device becomes larger.

Thus, an object of the present disclosure is to provide a powder removal device that can be made smaller.

### SOLUTION TO PROBLEM

A powder removal device according to one aspect removes powder from an additive molded object. This powder removal device includes a rotation drum having a processing chamber, and a holder disposed in the processing chamber to fix the additive molded object, wherein the rotation drum is rotatable around a first axis, and the holder is attached to the rotation drum to rotate together with the rotation drum around the first axis.

### EFFECTS OF INVENTION

According to various aspects of the present disclosure, the powder removal device can be made smaller.

### BRIEF DESCRIPTION OF THE DRAWINGS

FIG. 1 is a diagram schematically showing a modeling system including a powder removal device.
FIGS. 2A, 2B, and 2C are diagrams showing examples of a shape of an additive molded object.
FIG. 3 is a perspective view of a powder removal device according to an embodiment.
FIG. 4 is a vertical cross-sectional view of the powder removal device.
FIG. 5 is a cross-sectional view along line A-A in FIG. 4.
FIG. 6 is a cross-sectional view of an exemplary back panel.
FIG. 7 is a side view of an exemplary rotation drum.
FIG. 8 is a front view of the powder removal device with a housing omitted.
FIG. 9 is a flowchart showing an example of an operation of the powder removal device.
FIG. 10 is a front view of the powder removal device with the housing omitted.
FIG. 11 is a front view of the powder removal device with the housing omitted.

### DETAILED DESCRIPTION

An embodiment of the present disclosure will be described below with reference to the drawings. Also, in the following description, the same or corresponding elements will be denoted by the same reference signs, and redundant description will not be repeated. Dimensional ratios in the drawings do not necessarily coincide with those in the description. The terms "upper," "lower," "left," and "right" are based on illustrated states and are for convenience.

### [Overview of modeling system]

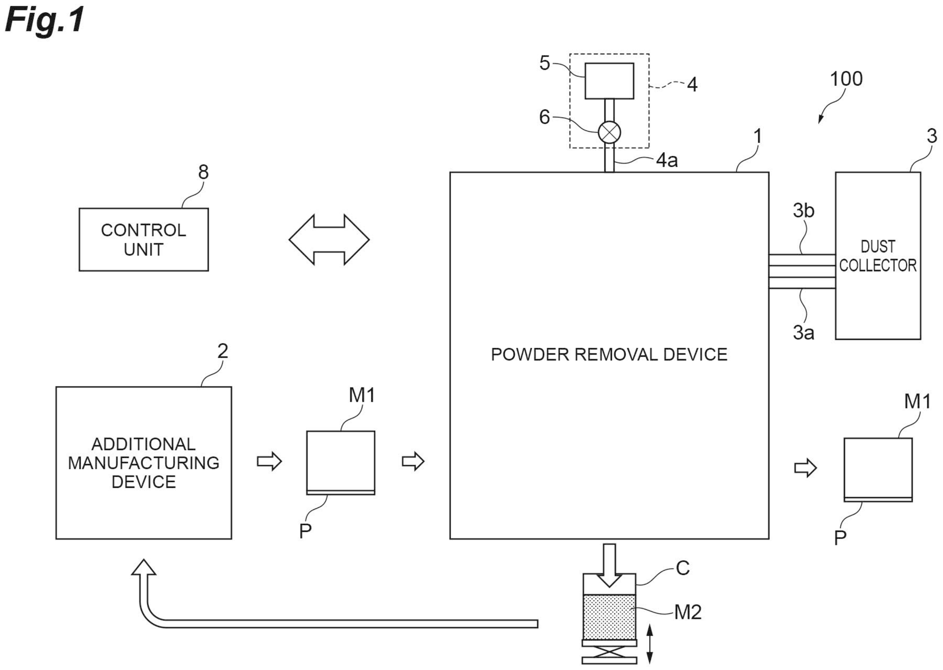

FIG. 1 is a diagram schematically showing a modeling system including a powder removal device according to one embodiment. A modeling system 100 shown in FIG. 1 is a system for modeling a molded object M1, which is an additive molded object, and removing powder M2 attached to the molded object M1 after modeling. The molded object M1 is a molded object having a three-dimensional shape obtained by repeatedly sintering or melting and solidifying the powder M2 serving as a raw material to form layers of two-dimensional shape. The powder M2 contains, for example, a metal. The metal includes, as an example, stainless steel, aluminum alloys, titanium, or the like.

The modeling system 100 includes a powder removal device 1 and an additional manufacturing device 2. The additional manufacturing device 2 forms the molded object M1 on the basis of three-dimensional CAD data, for example. The three-dimensional CAD data includes data on cross-sectional shapes of each layer. As an example, the additional manufacturing device 2 forms the molded object M1 having a three-dimensional shape by repeatedly depositing a film of a powdered raw material containing a metal (an example of metal powder) on a metal plate P, such as stainless steel, using a blade or the like, and irradiating the film with a laser or the like to form a layer of two-dimensional shape. The molded object M1 thus formed is removed from the additional manufacturing device 2 together with the plate P, with the unsintered or unmelted powder M2 attached thereto.

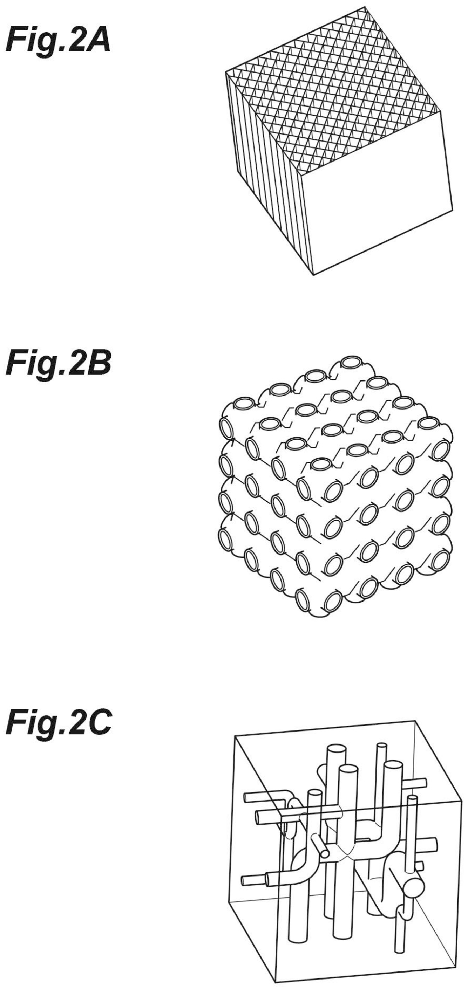

FIGS. 2A to 2C are diagrams showing examples of the molded object M1 manufactured by the additional manufacturing device 2. In additive manufacturing, reduction in weight of a member is often achieved by utilizing the characteristic manufacturing method to create a shape with an internal space. The molded object shown in FIG. 2A has fine holes formed on its surface. The molded object shown in FIG. 2B has a plurality of holes formed in six directions. The molded object shown in FIG. 2C has a complex internal structure. The molded objects shown in FIGS. 2A to 2C may not be able to have powder sufficiently removed by a powder removal method in the related art, such as a method of blowing a gas. For example, the molded object shown in FIG. 2A does not have a through hole shape (but has a blind hole shape), and thus it is difficult to sufficiently remove the powder by the method of blowing a gas. The powder removal device 1 removes the powder M2 from the molded object M1 having a complex shape by putting the molded object in an arbitrary posture and applying vibrations to the molded object.

The molded object M1 thus formed is transported together with the plate P into the powder removal device 1 using a transport device such as a forklift. The powder removal device 1 removes the powder M2 attached to a surface or inside of the molded object M1 formed in the additional manufacturing device 2. More specifically, the molded object M1 is fixed to a holder 30, which will be described later, in the powder removal device 1, and is put in a posture in accordance with a structure of the molded object M1. Then, vibrations are applied to the molded object M1, and the powder M2 attached to the surface or inside of the molded object M1 is separated and removed. Details of the inside of a processing chamber S will be described later. The molded object M1 from which the powder M2 has been removed is transported from the powder removal device 1 by a transport device.

The powder M2 removed by the powder removal device 1 is collected in a collecting container C. The collecting container C may be filled with an inert gas to prevent oxidation of the powder M2. The powder M2 stored in the collecting container C may be reused as the raw material for the molded object M1 in the additional manufacturing device 2.

In one embodiment, the modeling system 100 further includes a dust collector 3. The dust collector 3 is connected to the processing chamber S of the powder removal device 1 via a dust collecting pipe 3a. The dust collector 3 includes a filter for removing dust, for example, and collects the dust included in a gas in the processing chamber S of the powder removal device 1. In the dust collector 3, the gas that has passed through the filter is exhausted to the outside of the dust collector 3. An operation of the dust collector 3 may be performed in accordance with dust conditions in the processing chamber S. For example, a dust sensor may be provided in the processing chamber S, and the dust collector 3 may be operated when a detected value of the dust sensor exceeds a threshold value. This reduces excessive operations of the dust collector 3.

The powder M2 separated from the molded object M1 scatters inside the processing chamber S during the operation of the dust collector 3. If the oxygen concentration inside the processing chamber S is high, dust explosions may occur, and thus the modeling system 100 further includes a gas supply unit 4 that supplies an inert gas inside the processing chamber S of the powder removal device 1. The gas supply unit 4 is connected to the processing chamber S of the powder removal device 1 via a gas pipe 4a. The gas supply unit 4 includes a gas source 5 and a valve 6. The gas source 5 supplies the inert gas to the gas pipe 4a. The inert gas is, for example, nitrogen gas or argon gas. The inert gas supplied from the gas source 5 is introduced into the processing chamber S of the powder removal device 1 via the gas pipe 4a. The valve 6 is provided in the gas pipe 4a and controls a flow rate of the inert gas supplied to the processing chamber S of the powder removal device 1.

When the oxygen concentration in the processing chamber S of the powder removal device 1 is 10% or less, dust explosions are less likely to occur. For this reason, the oxygen concentration in the processing chamber S is adjusted to 10% or less during the operation of the powder removal device 1. The oxygen concentration in the processing chamber S during the operation of the powder removal device 1 may be set to 5% or less. Also, by setting the oxygen concentration to 10% or less, it is also possible to prevent the powder M2 from being oxidized in the processing chamber S and becoming unable to be reused. In addition, by making the processing chamber S an inert gas atmosphere, a separate sealing process to fill the collecting container C with the inert gas is omitted.

The exhaust gas from the dust collector 3 may be returned to the processing chamber S of the powder removal device 1 via a pipe 3b. That is, the dust collector 3 circulates the gas (air or inert gas) in the processing chamber S. This makes it possible to reduce an amount of inert gas supplied to maintain the oxygen concentration in the processing chamber S.

Also, in FIG. 1, the dust collector 3 and the gas supply unit 4 are illustrated as separate devices from the powder removal device 1, but in one embodiment, the powder removal device 1 may include at least one of the dust collector 3 and the gas supply unit 4.

The powder removal device 1 includes a control unit 8 that operates the above-described constituent elements. The control unit 8 is configured as a programmable logic controller (PLC), for example. The control unit 8 may also be configured as a computer system including a processor such as a central processing unit (CPU), memories such as a random access memory (RAM) and a read only memory (ROM), input and output devices such as a touch panel, a mouse, a keyboard, and a display, and a communication device such as a network card. The control unit 8 can automate the operation of the powder removal device 1 by operating each piece of hardware under the control of the processor based on a computer program stored in the memory. For example, the control unit 8 sends control signals to the powder removal device 1, the dust collector 3, and the valve 6 to control operations of the powder removal device 1, the dust collector 3, and the valve 6.

### [Details of powder removal device]

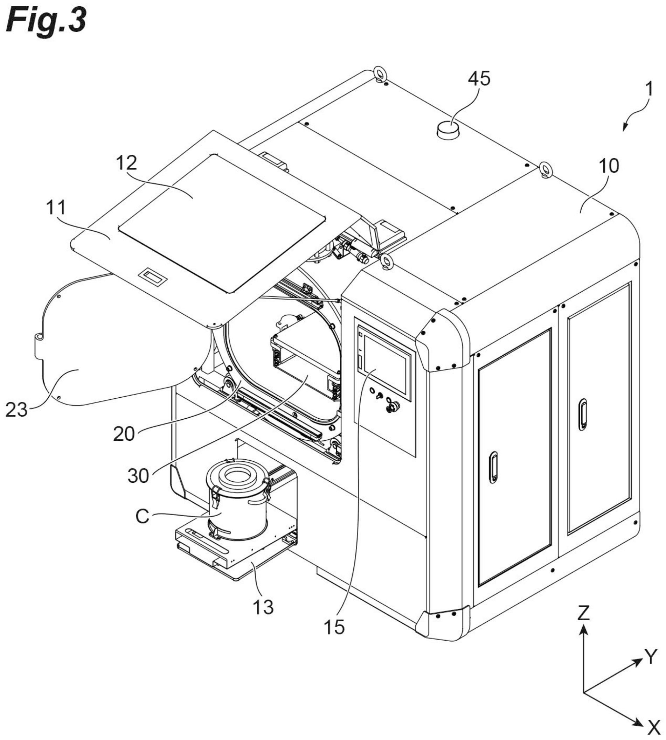

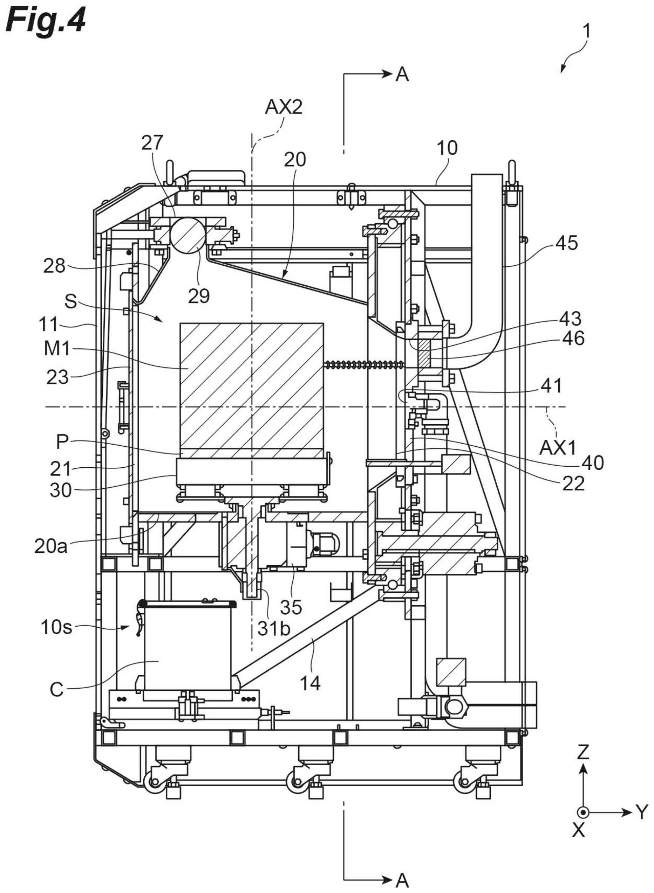

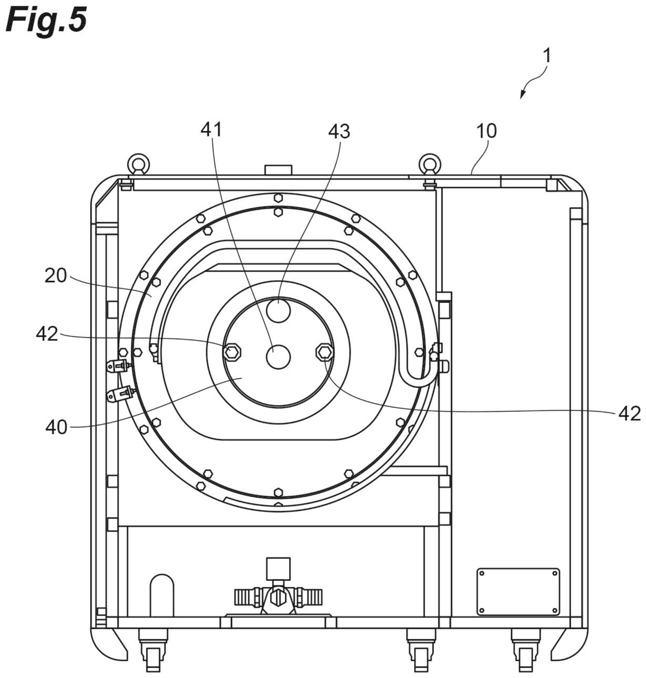

FIG. 3 is a perspective view of the powder removal device 1 according to one embodiment. FIG. 4 is a vertical cross-sectional view of the powder removal device 1. FIG. 5 is a cross-sectional view along line A-A in FIG. 4. Also, in the following description, three mutually orthogonal axial directions will be described as an "X direction," "Y direction," and "Z direction." The X direction and the Y direction are horizontal directions perpendicular to each other, and the Z direction is a vertical direction. In the following description, one side in the Y direction may be referred to as a "front side" and the other side in the Y direction as a "rear side."

As shown in FIG. 3, the powder removal device 1 includes a housing 10, a rotation drum 20, and a holder 30. The housing 10 houses the rotation drum 20 and the holder 30 therein. An opening and closing door 11 for taking the molded object M1 in and out is provided on the front side of the housing 10. The opening and closing door 11 may have a window 12 for visually checking the inside of the housing 10.

The housing 10 does not have an opening for inserting a hand into the housing 10. Accordingly, it is possible to prevent an accident in which a hand gets caught in a rotating body in the housing 10 when the hand is put into the housing 10 for cleaning the inside of the housing 10, or the like.

Also, a discharge door 13 is provided on a lower side of the housing 10. The discharge door 13 can slide in the Y direction by operating an actuator 14 such as a cylinder. By placing the collecting container C on the discharge door 13 and sliding the discharge door 13 rearward, the collecting container C is housed in a housing space 10s in the housing 10. As shown in FIG. 4, the housing space 10s is located below the rotation drum 20.

The rotation drum 20 is provided inside the housing 10. As shown in FIG. 4, the rotation drum 20 is formed in a cylindrical shape and defines the processing chamber S therein. The rotation drum 20 is supported in the housing 10 so that it can rotate around a first axis AX1 extending in the Y direction. The rotation drum 20 has a front opening 21 that opens forward and a rear opening 22 that opens rearward. The rotation drum 20 has a lid 23 for opening and closing the front opening 21. By opening the opening and closing door 11 and the lid 23, the molded object M1 can be transported into the processing chamber S. By closing the lid 23, the processing chamber S is sealed from the front.

The powder removal device 1 includes a back plate 40 for covering the rear opening 22. The back plate 40 is fixed to the housing 10 and is irrotational relative to the housing 10. In other words, the rotation drum 20 rotates relative to the back plate 40. The back plate 40 is in contact with an edge of the rear opening 22 of the rotation drum 20 via a sealing member such as an oil seal. This seals the processing chamber S from the rear.

In one embodiment, as shown in FIG. 5, the back plate 40 has a gas hole 41 for supplying the inert gas to the processing chamber S. The gas hole 41 is an opening that penetrates the back plate 40 in a thickness direction thereof and is connected to the gas pipe 4a. The inert gas from the gas source 5 is supplied to the processing chamber S through the gas pipe 4a and the gas hole 41. Also, in one embodiment, the back plate 40 has a dust collecting hole 42 for discharging the powder M2 in the processing chamber S to the outside. The dust collecting hole 42 is an opening that penetrates the back plate 40 in the thickness direction and is connected to a dust collecting pipe 3a. When the dust collector 3 is operated, the powder M2 scattered in the processing chamber S is sent to the dust collector 3 through the dust collecting hole 42 and the dust collecting pipe 3a together with the gas (for example, the inert gas) in the processing chamber S. The powder M2 sent to the dust collector 3 is collected by the filter of the dust collector 3.

**In** one embodiment, as shown in FIG. 5, the back plate 40 further has an exhaust hole 43. The exhaust hole 43 is connected to an exhaust pipe 45. The exhaust pipe 45 discharges the gas in the processing chamber S to the outside. The powder removal device 1 may include a release valve 46 for releasing the gas in the processing chamber S to the outside via the exhaust pipe 45 when a pressure in the processing chamber S exceeds a reference value (see FIG. 4). The release valve 46 automatically opens when the pressure in the processing chamber S rises excessively due to, for example, dust explosions, and releases the excessive pressure to the outside, thereby preventing damage to the powder removal device 1.

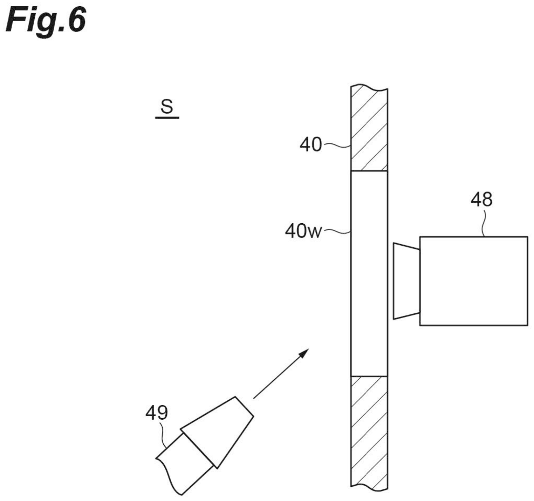

In one embodiment, the powder removal device 1 may further include a camera 48 for imaging the inside of the processing chamber S. For example, the camera 48 is fixed to an outer side of the back plate 40. FIG. 6 is a cross-sectional view of an exemplary back plate 40. As shown in FIG. 6, the back plate 40 may have a translucent window portion 40w. The window portion 40w is made of a transparent resin material such as polycarbonate or acrylic, for example. As shown in FIG. 6, the camera 48 is disposed outside the processing chamber S and images the inside of the processing chamber S through the window portion 40w. The camera 48 may include a lighting that radiates light to the inside of the processing chamber S.

A nozzle 49 for injecting a gas toward the window portion 40w may be provided in the processing chamber S. By injecting a gas toward the window portion 40w, dust or the like of the powder M2 attached to the window portion 40w are removed, which prevents the camera 48 from being hindered from imaging the inside of the processing chamber S. Also, the nozzle 49 may inject, for example, an inert gas toward the window portion 40w.

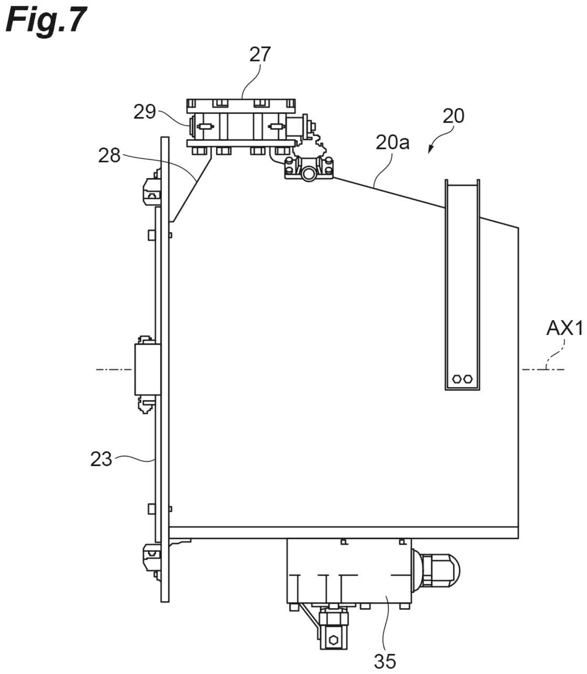

FIG. 7 is a side view of an exemplary rotation drum 20. The rotation drum 20 is rotatable around the first axis AX1 extending in the Y direction. For example, the rotation drum 20 includes a driving device that generates a driving force and a transmission mechanism that transmits the driving force. For the transmission mechanism, for example, a belt that transmits rotation of the driving device to the rotation drum 20 is used. When a rotational force is transmitted to the rotation drum 20 by driving of the driving device, the rotation drum 20 rotates around the first axis AX1. An operation of the driving device is controlled by the control unit 8.

Also, a discharge port 27 for discharging the powder M2 in the processing chamber S is formed in a peripheral wall 20a of the rotation drum 20. A hopper 28 for guiding the powder M2 to the discharge port 27 is connected to the discharge port 27. A discharge valve 29 for opening and closing the discharge port 27 is provided in the discharge port 27. The discharge valve 29 is a butterfly valve, for example. When the rotation drum 20 rotates around the first axis AX1 and the discharge port 27 is disposed downward, the discharge port 27 is disposed at a position at which it faces the collecting container C disposed in the housing space 10s. When the discharge valve 29 opens in this state, the powder M2 is discharged from the discharge port 27 and collected in the collecting container C.

A sieve may be provided in the discharge port 27 of the powder removal device 1. The sieve classifies the discharged powder M2. In the additional manufacturing device 2, particles (spatter) larger than the powder used as the raw material may be generated during additive manufacturing. The powder used as the raw material has an average size of about 10 µm to 50 µm, and particles larger than 100 µm are less likely to melt and may get caught between a blade and a top surface of the molded object when the additional manufacturing device 2 lays films, which may affect additive manufacturing. The sieve removes spatter that cannot be reused. This allows powder of a reusable size to be collected. The sieve may include a mechanism for vibrating by ultrasonic waves or the like.

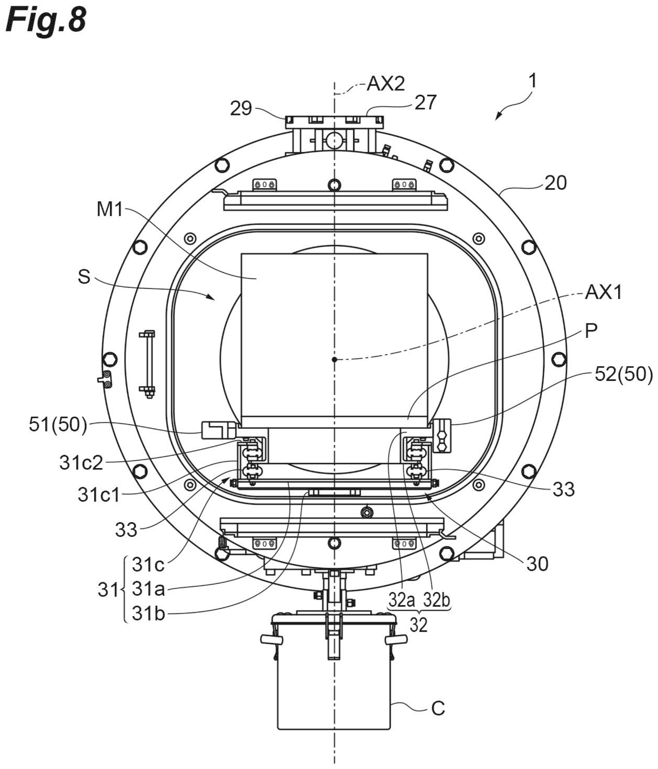

FIG. 8 shows a front view of the powder removal device 1. Also, for convenience of description, the housing 10 is omitted in FIG. 8. As shown in FIG. 8, the holder 30 is attached to the peripheral wall 20a of the rotation drum 20 and disposed in the processing chamber S. Accordingly, when the rotation drum rotates around the first axis AX1, the holder 30 rotates around the first axis AX1 together with the rotation drum 20. As described below, the holder 30 is a rotation table that can rotate around a second axis AX2 that intersects the first axis AX1.

The holder 30 fixes the molded object M1 in the processing chamber S. The holder 30 includes a first member 31, a second member 32, and an elastic body 33. The first member 31 includes a body portion 31a, a rotation shaft 31b, and a pair of flange portions 31c. The body portion 31a is, for example, a metal plate. The rotation shaft 31b is connected to a center portion of the body portion 31a. The rotation shaft 31b extends along the second axis AX2 perpendicular to the first axis AX1, and is supported by the rotation drum 20 to be rotatable around the second axis AX2. As shown in FIG. 4, the rotation shaft 31b penetrates the peripheral wall 20a of the rotation drum 20 and extends to the outside of the rotation drum 20. A driving device 35 is provided outside the rotation drum 20. The driving device 35 is, for example, an electric motor. An operation of the driving device 35 is controlled by the control unit 8. When the driving device 35 is driven, a driving force is transmitted to the rotation shaft 31b, and the holder 30 rotates around the second axis AX2 together with the molded object M1.

The pair of flange portions 31c are provided to stand from both ends of the body portion 31a toward the second member 32. Each of the pair of flange portions 31c includes a base end portion 31c1 that extends in a direction parallel to the second axis AX2, and a tip portion 31c2 that extends from the base portion 31c1 in a direction perpendicular to the first axis AX1 and the second axis AX2. The tip portions 31c2 of the pair of flange portions 31c face the body portion 31a. That is, each of the pair of flange portions 31c has a substantially L-shaped cross-sectional shape.

The second member 32 includes a body portion 32a and a pair of protruding portions 32b. The body portion 32a is, for example, a metal plate, and is provided on the first member 31. The pair of protruding portions 32b protrude from the body portion 32a in a direction perpendicular to the first axis AX1 and the second axis AX2, and are respectively disposed between the body portion 31a and the tip portions 31c2 of the pair of flange portions 31c. The pair of protruding portions 32b are disposed between the body portion 31a and the tip portions 31c2 of the pair of flange portions 31c, and thus when the rotation drum 20 rotates around the first axis AX1, separation of the first member 31 from the second member 32 is prevented.

The elastic body 33 is disposed between the first member 31 and the second member 32. In the embodiment shown in FIG. 8, elastic bodies 33 are respectively provided between the body portion 31a and the pair of protruding portions 32b, and between the pair of protruding portions 32b and the tip portions 31c2 of the pair of flange portions 31c. That is, the first member 31 supports the second member 32 via a plurality of elastic bodies 33.

The plate P transported into the processing chamber S is fixed to the second member 32 by fastening members such as bolts or clamps. Thus, the molded object M1 disposed on the plate P is fixed to the holder 30. Also, the second member 32 may be provided with a member for positioning a fixed position of the plate P.

In addition, the powder removal device 1 further includes one or a plurality of vibrators 50 that apply vibrations to the molded object M1 fixed to the holder 30. In the embodiment shown in FIG. 8, the powder removal device 1 includes a first vibrator 51 and a second vibrator 52 (another vibrator) as the vibrators 50. The first vibrator 51 and the second vibrator 52 are, for example, ultrasonic vibrating devices, ball vibrators, relay knockers, vibration motors, or piston vibrators. In one embodiment, the first vibrator 51 and the second vibrator 52 apply vibrations to the molded object M1 in different directions. For example, the first vibrator 51 is fixed to the second member 32 of the holder 30 and applies vibrations to the second member 32 in a width direction of the second member 32 (a direction perpendicular to the first axis AX1 and the second axis AX2). On the other hand, the second vibrator 52 is fixed to the second member 32 of the holder 30 and applies vibrations to the second member 32 in a thickness direction of the second member 32 (a direction parallel to the second axis AX2). Thus, the vibrations in different directions are applied to the plate P, and as a result, the vibrations are applied to the molded object M1 from any direction. Accordingly, the efficiency of powder removal is improved.

### [Operation of powder removal device]

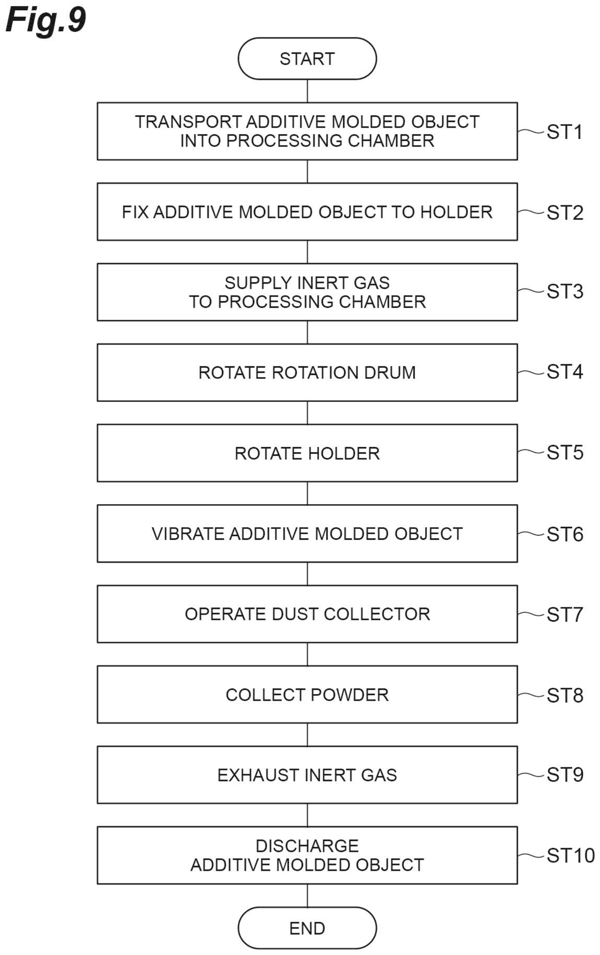

Next, the operation of the powder removal device 1 will be described with reference to FIG. 9. FIG. 9 is a flowchart showing the operation of the powder removal device 1. As shown in FIG. 9, the manufactured molded object M1 is first removed from the additional manufacturing device 2, and the molded object M1 is transported into the processing chamber S of the powder removal device 1 together with the plate P (step ST1).

Next, the plate P is fastened to the holder 30 with bolts or the like, thereby fixing the molded object M1 to the holder 30 (step ST2). Next, the inert gas is supplied to the processing chamber S (step ST3). For this purpose, the control unit 8 controls the valve 6 to supply the inert gas from the gas source 5 to the processing chamber S. In this case, the inert gas is continuously supplied to the processing chamber S until the oxygen concentration in the processing chamber S becomes 10% or less or 5% or less. When the oxygen concentration in the processing chamber S becomes 10% or less or 5% or less, the supply of the inert gas from the gas source 5 is stopped.

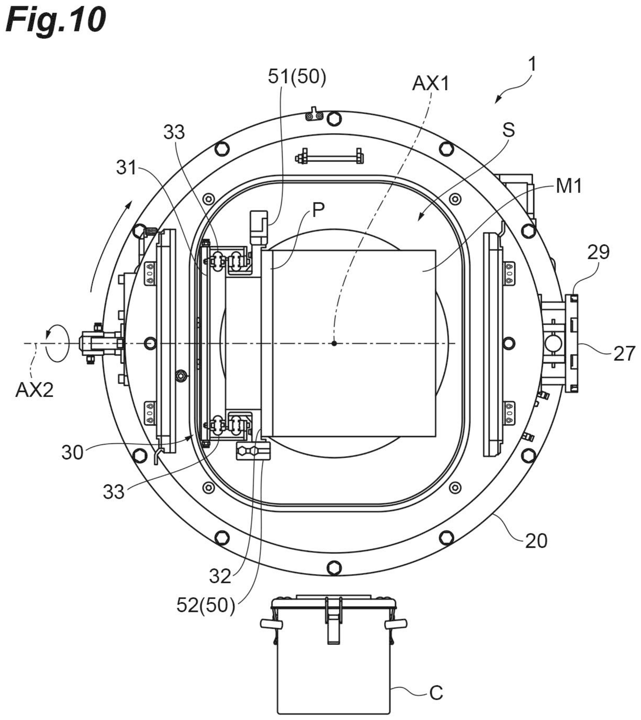

Next, the rotation drum 20 is rotated around the first axis AX1 (step ST4). In order to rotate the rotation drum 20, the control unit 8 controls the operation of the driving device 25. Next, the holder 30 is rotated around the second axis AX2 (step ST5). In order to rotate the holder 30, the control unit 8 controls the operation of the driving device 35. In step ST4 and step ST5, a rotation angle of the rotation drum 20 around the first axis AX1 and a rotation angle of the holder 30 around the second axis AX2 are adjusted so that the posture of the molded object M1 is such that the powder M2 easily falls from the molded object M1. For example, the rotation angles of the rotation drum 20 and the holder 30 are adjusted so that the opening formed in the molded object M1 faces downward. FIG. 10 shows the powder removal device 1 in which the rotational angles of the rotation drum 20 and the holder 30 have been adjusted.

Next, with the posture of the molded object M1 changed, vibrations are applied to the molded object M1 by the first vibrator 51 and the second vibrator 52 (step ST6). In this case, the first vibrator 51 and the second vibrator 52 may apply vibrations to the molded object M1 in different directions from each other. In order to operate the first vibrator 51 and the second vibrator 52, the control unit 8 sends control signals to the first vibrator 51 and the second vibrator 52. By applying vibrations to the molded object M1, the powder M2 attached to the surface or inside of the molded object M1 falls off and is removed.

Here, an operator can manually manipulate the rotation angle of the rotation drum 20 around the first axis AX1, the rotation angle of the holder 30 around the second axis AX2, and the operations of the first vibrator 51 and the second vibrator 52 by manipulating a touch panel 15 (see FIG. 1) or manipulation controller connected to the control unit 8. Then, the series of operations executed by the manual operation can be stored in the control unit 8 as a program, and the same operations according to the program can be repeatedly played back.

In one embodiment, steps ST4 to ST6 may be repeatedly performed to apply vibrations to the molded object M1 while sequentially changing the posture of the molded object M1, thereby removing the powder M2 from the molded object M1. Also, steps ST4 to ST6 may be performed simultaneously.

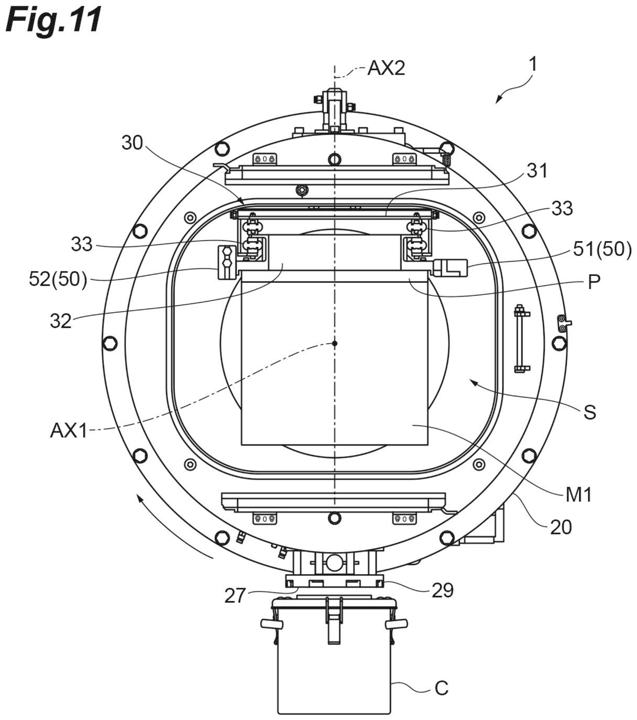

Next, the dust collector 3 is operated (step ST7). Thus, the dust of the powder M2 that has risen in the processing chamber S when vibrations are applied to the molded object M1 is collected by the dust collector 3. Next, the powder M2 removed from the molded object M1 is collected (step ST8). For example, as shown in FIG. 11, the discharge port 27 of the rotation drum 20 is disposed at the position at which it faces the collecting container C, and the discharge valve 29 is opened. For this purpose, the control unit 8 sends control signals to the driving device 25 and the discharge valve 29. Thus, the powder M2 removed from the molded object M1 is collected in the collecting container C.

Next, the inert gas is exhausted from the processing chamber S (step ST9). In order to exhaust the inert gas, for example, a purge valve (not shown) formed in the rotation drum 20 is opened, and the dust collector 3 is operated. A suction force of the dust collector 3 causes air to flow into the processing chamber S through the purge valve, and thus the atmosphere in the processing chamber S is replaced with air. Next, the opening and closing door 11 of the housing 10 and the lid 23 of the rotation drum 20 are opened, and fixation of the plate P to the holder 30 is released. Then, the molded object M1 from which the powder M2 has been removed is transported out of the processing chamber S (step ST10).

As described above, in the powder removal device 1, the rotation drum 20 is rotatable around the first axis AX1 and the holder 30 is rotatable around the second axis AX2 perpendicular to the first axis AX1, and thus the posture of the molded object M1 fixed to the holder 30 can be changed as desired. In addition, vibrations are applied to the molded object M1 fixed to the holder 30 by the first vibrator 51 and the second vibrator 52. Thus, according to the powder removal device 1, the powder M2 can be sifted off by placing the molded object M1 in a posture that allows the powder M2 to fall off easily. Accordingly, the powder removal device 1 can properly remove the powder M2 attached to the molded object M1 even if the molded object M1 has a complex structure on its surface or inside as shown in FIGS. 2A to 2C.

Also, in the powder removal device 1, the holder 30 is attached to the rotation drum 20 and rotates around the first axis together with the rotation drum 20. That is, when the posture of the molded object M1 is changed around the first axis AX1, the molded object M1 is irrotational relative to the rotation drum 20, and thus the molded object M1 is prevented from contacting the rotation drum 20. Accordingly, the processing chamber S can be designed to be small, and the powder removal device 1 can be made smaller.

Further, in the powder removal device 1, the holder 30 rotates on one axis within the rotation drum 20, and thus the structure of the holder 30 can be simplified. Thus, the number of structures in the processing chamber S can be reduced, and thus the labor required for cleaning the processing chamber S by washing the rotation drum 20 can be reduced.

Although the powder removal device 1 according to various embodiments has been described above, the present disclosure is not limited to the above-described embodiments, and various modifications can be made without changing the gist of the invention. That is, it should be noted that the above-described embodiments are for illustrative purposes only and are not intended to limit the scope of the present invention.

For example, in the above embodiment, by fixing the plate P to the holder 30, the holder 30 fixes the molded object M1 and the plate P, but the holder 30 may directly fix the molded object M1. That is, the holder 30 may fix the molded object M1 directly or indirectly. Also, the powder removal device 1 may include only one of the first vibrator 51 and the second vibrator 52, or may include three or more vibrators.

The powder M2 may not contain a metal. For example, powder M2 may be a resin powder. The powder removal device 1 may not include the dust collector 3, the gas supply unit 4, and the nozzle 49. Some or all of the operations of the powder removal device 1 may be performed by the control unit 8 or by the operator or others. An oxygen sensor may be disposed in the processing chamber S and the powder removal device 1 may stop operation in accordance with a detection value of the oxygen sensor. Thus, the powder removal device 1 can stop the powder removal process in the event of an abnormality such as air suction, and thus the process can be made safer. In the case of using powder M2, which has physical properties that do not cause dust explosions even when an ignition source is present, the gas supplied to the processing chamber S is not limited to an inert gas, and may be compressed air supplied by a compressor or the like.

### [Forms included in present disclosure]

The present disclosure includes the forms described in the following clauses.

### (Clause 1)

A powder removal device according to the present disclosure removes powder from an additive molded object. The powder removal device according to one aspect removes powder from an additive molded object. The powder removal device includes a rotation drum having a processing chamber and a holder disposed in the processing chamber to fix the additive molded object, wherein the rotation drum is rotatable around a first axis, and the holder is attached to the rotation drum to rotate around the first axis together with the rotation drum. In this powder removal device, the holder is attached to the rotation drum and rotates around the first axis together with the rotation drum. That is, when a posture of the molded object is changed around the first axis, the molded object is irrotational relative to the rotation drum, and the molded object is prevented from contacting the rotation drum. Accordingly, the processing chamber can be designed to be small, and the powder removal device can be made smaller.

### (Clause 2)

The powder removal device according to clause 1 may further include a vibrator that applies vibrations to the additive molded object fixed to the holder. In this case, the powder can be sifted off the molded object due to the vibrations of the vibrator.

### (Clause 3)

In the powder removal device according to clause 1 or 2, the holder may be rotatable around a second axis that intersects the first axis. In the powder removal device, the rotation drum is rotatable around the first axis, and the holder is rotatable around the second axis, and thus the posture of the molded object fixed to the holder can be changed as desired. Accordingly, the powder can be sifted off by placing the molded object in a position that allows the powder to fall off easily. Thus, the powder removal device can properly remove the powder attached to the molded object, even if the molded object has a complex structure.

### (Clause 4)

In the powder removal device according to any one of clauses 1 to 3, the rotation drum may have a rear opening, the powder removal device may include an irrotational back plate covering the rear opening, and the back plate may have a gas hole for supplying an inert gas to the processing chamber. The rotation drum may have the rear opening, and the powder removal device may have the irrotational back plate covering the rear opening. By having the irrotational back plate, it is possible to prevent pipes connected to the back plate from becoming entangled when the rotation drum rotates. Also, by supplying the inert gas to the processing chamber, the possibility of dust explosions can be reduced even if an ignition source such as static electricity occurs while the powder is scattered. In addition, by supplying the inert gas to the processing chamber, oxidation of the powder can be inhibited, and thus the collected powder can be reused as a raw material for the additive molded object.

### (Clause 5)

In the powder removal device according to clause 4, the back plate may have a dust collecting hole connected to a dust collector. By having the dust collecting hole connected to the dust collector, dust that has risen in the processing chamber can be removed.

### (Clause 6)

In the powder removal device according to clause 4 or 5, the back plate may have an exhaust hole connected to an exhaust pipe, and the powder removal device may further have a release valve for releasing a gas in the processing chamber to the outside via the exhaust pipe when a pressure in the processing chamber exceeds a reference value. By providing the release valve, the pressure can be released to the outside when the pressure in the processing chamber becomes excessive due to dust explosions or the like, thereby preventing damage to the powder removal device.

### (Clause 7)

In the powder removal device according to any one of clauses 1 to 6, the rotation drum may have a discharge port for discharging the powder from the processing chamber, and the powder removal device may further include a discharge valve for opening and closing the discharge port. In this case, the powder removed from the additive molded object can be discharged from the discharge port.

### (Clause 8)

In the powder removal device according to any one of clauses 1 to 7, the holder may include a first member, a second member supporting the additive molded object, and an elastic body disposed between the first member and the second member. By including the elastic body, vibrations generated by the vibrator fixed to the holder can be efficiently applied to the additive molded object also fixed to the holder.

### (Clause 9)

The powder removal device according to any one of clauses 2 to 8 may further include another vibrator different from the vibrator, wherein the vibrator and the other vibrator may apply vibrations to the additive molded object in different directions. In the powder removal device, vibrations can be applied to the molded object from any direction, and thus the powder can be effectively sifted off.

### (Clause 10)

The powder removal device according to any one of clauses 4 to 9 may further include a camera for imaging the inside of the processing chamber, wherein the back plate may have a translucent window portion, and the camera may be disposed outside the processing chamber to image the inside of the processing chamber via the window portion. By imaging the inside of the processing chamber with the camera, the posture of the additive molded object can be changed while checking a state of powder removal. Thus, the powder can be effectively removed. In addition, by disposing the camera outside the processing chamber, damage to the camera can be inhibited.

### (Clause 11)

The powder removal device according to clause 10 may further include a nozzle that is provided in the processing chamber and injects a gas toward the window portion. By injecting the gas toward the window portion, the powder attached to the window portion can be removed. Accordingly, it is possible to prevent the imaging of the inside of the processing chamber from being hindered by dirt on the window portion.

### REFERENCE SIGNS LIST

1 Powder removal device,, 3 Dust collector, 20 Rotation drum, 27 Discharge port, 29 Discharge valve, 30 Holder, 40 Back plate, 40w Window portion, 41 Gas hole, 42 Dust collecting hole, 43 Exhaust hole, 45 Exhaust pipe, 46 Release valve, 48 Camera, 49 Nozzle, 50 Vibrator, 51 First vibrator, 52 Second vibrator (another vibrator), AX1 First axis, AX2 Second axis, M1 Molded object (additive molded object), M2 Powder, S Processing chamber

## Claims

1. A powder removal device configured to remove powder from an additive molded object, comprising:
a rotation drum having a processing chamber; and
a holder disposed in the processing chamber to fix the additive molded object,
wherein
the rotation drum is rotatable around a first axis, and
the holder is attached to the rotation drum to rotate around the first axis together with the rotation drum.

2. The powder removal device according to claim 1, further comprising a vibrator that applies vibrations to the additive molded object fixed to the holder.

3. The powder removal device according to claim 1 or 2, wherein the holder is rotatable around a second axis that intersects the first axis.

4. The powder removal device according to any one of claims 1 to 3, wherein the rotation drum includes a rear opening,
the powder removal device includes an irrotational back plate covering the rear opening, and
the back plate includes a gas hole configured to supply an inert gas to the processing chamber.

5. The powder removal device according to claim 4, wherein the back plate includes a dust collecting hole connected to a dust collector.

6. The powder removal device according to claim 4 or 5, wherein the back plate includes an exhaust hole connected to an exhaust pipe, and
the powder removal device further includes a release valve configured to release a gas in the processing chamber to the outside via the exhaust pipe when a pressure in the processing chamber exceeds a reference value.

7. The powder removal device according to any one of claims 1 to 6, wherein the rotation drum includes a discharge port configured to discharge the powder from the processing chamber, and
the powder removal device further includes a discharge valve configured to open and close the discharge port.

8. The powder removal device according to any one of claims 1 to 7, wherein the holder includes a first member, a second member supporting the additive molded object, and an elastic body disposed between the first member and the second member.

9. The powder removal device according to claim 2, further comprising another vibrator different from the vibrator, wherein
the vibrator and the other vibrator apply vibrations to the additive molded object in different directions.

10. The powder removal device according to any one of claims 4 to 6, further comprising a camera configured to image the inside of the processing chamber, wherein
the back plate includes a translucent window portion, and
the camera is disposed outside the processing chamber to image the inside of the processing chamber via the window portion.

11. The powder removal device according to claim 10, further comprising a nozzle that is provided in the processing chamber and injects a gas toward the window portion.
